# EUROPEAN PATENT APPLICATION

(11) **EP 3 270 344 A1**
(43) Date of publication of application: **17.01.2018**
(21) Application number: 16305875.3
(22) Date of filing: 11.07.2016
(51) Int. Cl.: G06Q 20/00, H04L 9/32, H04L 29/06

(54) **PAYMENT DEVICE ADAPTED TO ESTABLISH A SECURE MESSAGING CHANNEL WITH A REMOTE SERVER FOR A PAYMENT TRANSACTION AND ASSOCIATED REMOTE SERVER**

(71) Applicant: GEMALTO SA, 92190 Meudon (FR)
(72) Inventor: RATIER, Patrick, 92190 MEUDON (FR); GOUGET, Aline, 92190 MEUDON (FR); DESJARDINS, Jean-Michel, 92190 MEUDON (FR)
(74) Representative: Lotaut, Yacine Diaw

(57) **Abstract**

The present invention relates to a payment device (D) adapted to establish a secure messaging channel (SM) with a remote server (RS) for a payment transaction (T), wherein said payment device (D) is adapted to:
- receive from said remote server (RS) a remote server certificate chain (RSca);
- verify said remote server certificate chain (RSca);
- receive from said remote server (RS) a remote server challenge (RSch);
- send to said remote server (RS) a first parameter (SKA), a payment device signature (Slcc), and a payment device challenge (ICCch), said payment device signature (Slcc) being based on said remote server challenge (RSch) and on said first parameter (SKA);
- receive a second parameter (SKB) and a remote server signature (Srs) from said remote server (RS), said remote server signature (Srs) being based on said second parameter (SKB) and on said payment device challenge (ICCch);
- verify said remote server signature (Srs) for authenticating said remote server (RS);
- generate session keys (K_{ICC}Enc, K_{ICC}Mac, K_{RS}Mac) from a first random number (RD1) and from said second parameter (SKB) using a cryptographic algorithm (ALG), for establishing a secure messaging channel (SM).

## Description

### TECHNICAL FIELD

The present invention relates to a payment device adapted to establish a secure messaging channel with a remote server for a payment transaction. The invention also relates to an associated remote server and a corresponding method.

### BACKGROUND OF THE INVENTION

A payment device adapted to establish a secure messaging channel with a remote server for a payment transaction, well-known by the man skilled in the art, is used when a purchase is made at a merchant place for example. In this case, the payment device, which is a card, is swiped or introduced through a card reader attached to a point of sale device. A secure messaging channel is established between said card and the remote server of the merchant in order to exchange card information for a purchase authorization. Such purchases are referred to as "card present" transactions.

When the purchase is being made online or over a mobile phone, the customer provides the card information to the merchant without the need of a card reader attached to a point of sale device, and without the merchant ever seeing the customer or the card. Such purchases are referred to as "card not present" transactions. There is no secure messaging channel between said card and any remote server of the merchant.

One problem of this prior art is that there is higher incidence of frauds with the "card not present" transactions than with the "card present" transactions which leads to a direct cost for the merchant.

### SUMMARY OF THE INVENTION

It is an object of the invention to provide a payment device adapted to establish a secure messaging channel with a remote server for a payment transaction, which grants a high secrecy and safety in exchanging data for online transactions or mobile phone transactions.

To this end, there is provided a payment device adapted to establish a secure messaging channel with a remote server for a payment transaction, wherein said payment device is adapted to:
- receive from said remote server a remote server certificate chain;
- verify said remote server certificate chain;
- receive from said remote server a remote server challenge;
- send to said remote server a first parameter, a payment device signature, and a payment device challenge, said payment device signature being based on said remote server challenge and on said first parameter;
- receive a second parameter and a remote server signature from said remote server, said remote server signature being based on said second parameter and on said payment device challenge;
- verify said remote server signature for authenticating said remote server;
- generate session keys from a first random number and from said second parameter using a cryptographic algorithm, for establishing a secure messaging channel.

According to non-limitative embodiments of the invention, the payment device in accordance with the invention further comprises the following characteristics.

In a non-limitative embodiment, said payment device is further adapted to compute said first parameter using said first random number.

In a non-limitative embodiment, said payment device is further adapted to:
- compute said payment device challenge;
- compute said payment device signature from said remote server challenge and from said first parameter.

In a non-limitative embodiment, said payment device is further adapted to send to said remote server a certificate chain.

In a non-limitative embodiment, said payment device is further adapted to send to said remote server:
- a first root public key index;
- a second root public key index;
- a parameter index.

In a non-limitative embodiment, the cryptographic algorithm is a Diffie-Hellman algorithm.

In a non-limitative embodiment, the computation of said payment device signature is performed with a RSA algorithm.

In a non-limitative embodiment, said payment device is further adapted to retrieve a remote server public authentication key from said remote server certificate chain, said remote server public authentication key being used to verify said remote server signature.

In a non-limitative embodiment, said first parameter is equal to g^{RD1} mod p, with RD1 the first random number and g and p Diffie Hellman parameters, and wherein the payment device is further adapted to compute K=SKB ^{RD1} mod p with K, K being used for the generation of the session keys.

In a non-limitative embodiment, said payment device is further adapted to send to said remote server:
- a payment device reminder;
- a payment device public exponent;
- an issuer reminder;
- an issuer public exponent.

In a non-limitative embodiment, said payment transaction is an EMV transaction.

In a non-limitative embodiment, the remote server certificate chain is in the format of an EMV certificate.

In a non-limitative embodiment, the payment device certificate chain is in the format of an EMV certificate.

In a non-limitative embodiment, said payment device is a mobile device or a secure element.

In addition, there is provided a remote server adapted to establish a secure messaging channel with a payment device for a payment transaction, wherein said remote server is adapted to establish a secure messaging channel with a payment device for a payment transaction, wherein said remote server is adapted to:
- receive from said payment device a payment device certificate chain;
- verify said payment device certificate chain;
- receive from said payment device a first parameter, a payment device signature and a payment device challenge;
- send to said payment device a second parameter, a remote server signature and a remote server challenge, said remote server signature being based on said second parameter and on said payment device challenge;
- verify said payment device signature for authenticating said payment device;
- generate session keys from said first parameter and from a second random number using a cryptographic algorithm, for establishing a secure messaging channel.

According to non-limitative embodiments of the invention, the remote server in accordance with the invention further comprises the following characteristics.

In a non-limitative embodiment, said remote server is further adapted to retrieve a payment device public authentication key from said payment device certificate chain, said payment device public authentication key being used to verify said payment device signature (SIcc).

In a non-limitative embodiment, said remote server is further adapted to:
- compute said remote server challenge;
- compute said second parameter using said second random number;
- compute said remote server signature from said payment device challenge and from said second parameter.

In a non-limitative embodiment, said remote server is further adapted to send to said payment device a remote server certificate chain.

In a non-limitative embodiment, said second parameter is equal to g^{RD2}mod p, with RD2 the second random number and g and p Diffie-Hellman parameters and wherein the remote server is further adapted to compute K=SKA ^{RD2} mod p with K, K being used for the generation of the session keys.

In a non-limitative embodiment, said remote server is further adapted to send to said payment device:
- a remote server reminder;
- a remote server public exponent.

In addition, there is provided a system adapted to establish a secure messaging channel for a payment transaction between a payment device and a remote server, wherein said system comprises said payment device according to any one of the previous characteristics and said remote server according to any one of the previous characteristics.

In addition, there is provided a method for establishing a secure messaging channel for a payment transaction between a payment device and a remote server, wherein said method comprises:
- receive by means of said payment device from said remote server a remote server certificate chain;
- verify by means of said payment device said remote server certificate chain;
- receive by means of said remote server from said payment device a payment device certificate chain;
- verify by means of said remote server said payment device certificate chain;
- receive by means of said payment device from said remote server a remote server challenge;
- send by means of said payment device to said remote server a first parameter, a payment device signature, and a payment device challenge, said payment device signature being based on said remote server challenge and on said first parameter;
- send by means of said remote server to said payment device a second parameter, a remote server signature and a remote server challenge, said remote server signature being based on said second parameter and on said payment device challenge;
- receive by means of said payment device a second parameter and a remote server signature from said remote server, said remote server signature being based on said second parameter and on said payment device challenge;
- verify by means of said payment device said remote server signature for authenticating said remote server;
- receive by means of said remote server from said payment device a first parameter, a payment device signature and a payment device challenge;
- verify by means of said remote server said payment device signature for authenticating said payment device;
- generate by means of said payment device session keys from a first random number and from said second parameter using a cryptographic algorithm, for establishing a secure messaging channel;
- generate by means of said remote server session keys from said first parameter and from a second random number using a cryptographic algorithm, for establishing a secure messaging channel.

### BRIEF DESCRIPTION OF THE FIGURES

Some embodiments of methods and/or apparatus in accordance with embodiments of the present invention are now described, by way of example only, and with reference to the accompanying drawings, in which:
- Fig.1 illustrates schematically the functions of a system comprising a payment device and a remote server according to a non-limitative embodiment of the invention, said payment device and said remote server being adapted to establish a secure communication channel for a payment transaction;
- Fig.2 illustrates schematically the data comprised within and exchanged between the payment device and the remote server of Fig. 1 for establishing a secure messaging channel for a payment transaction;
- Fig. 3 and Fig. 4 illustrate a schematic organization chart of a method carried out by the payment device and the remote server of Fig. 1.

### DESCRIPTION OF EMBODIMENTS OF THE INVENTION

In the following description, well-known functions or constructions by the man skilled in the art are not described in detail since they would obscure the invention in unnecessary detail.

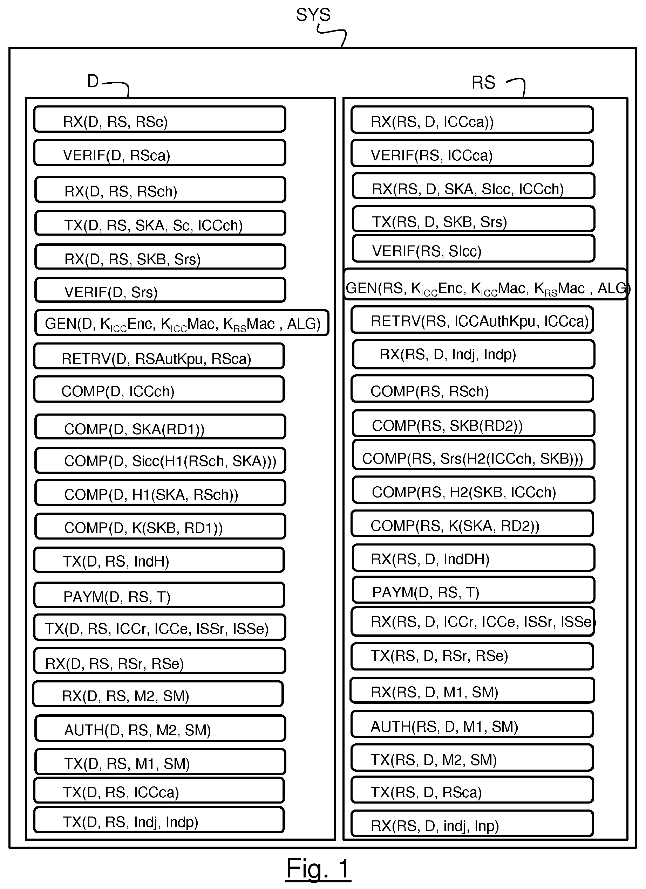

The present invention relates to a payment device D and a remote server RS. Said payment device D and said remote server RS are part of a system SYS. Said system SYS is illustrated in Fig. 1 in a non-limitative embodiment.

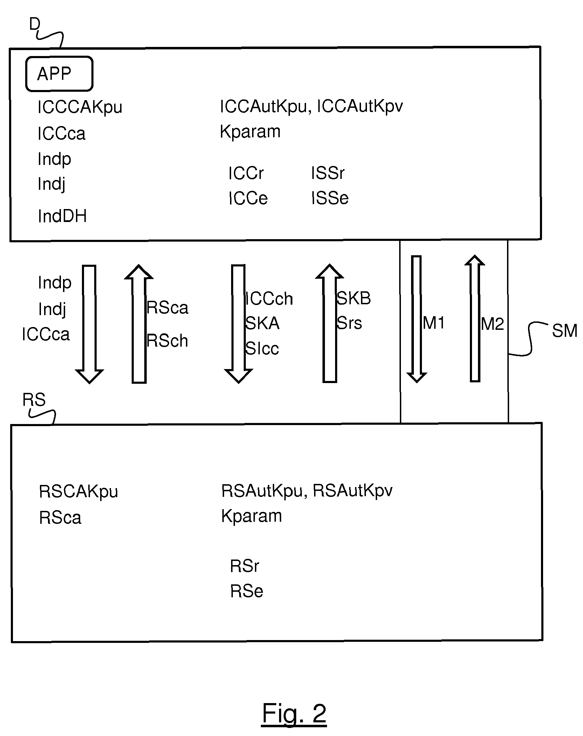

When a customer wants to perform a payment transaction T via internet or directly via its payment device D in order to purchase some goods, a secure messaging channel SM (illustrated in Fig. 2) is set-up between the payment device D and the remote server RS of the merchant who proposes said goods.

As will be described hereinafter, for this purpose, a mutual authentication is performed between said remote server RS and said payment device D and session keys are generated. The secure messaging channel SM is set-up so that said remote server RS and said payment device D may securely communicate together using said session keys in order to perform a payment transaction T. More particularly, a first parameter SKA and a second parameter SKB for the session keys are produced by said payment device D and said remote server RS while performing the mutual authentication.

The payment device D and the remote server RS are described in detail hereinafter with reference to Fig. 1 and Fig. 2.

### • Payment device

As illustrated in Fig. 2, the payment device D comprises a payment application APP which permits the payment device D to perform a payment transaction T with a remote server RS of a merchant. In a non-limitative embodiment, the payment application is an EMV ("Europay Mastercard Visa") application which permits to perform an EMV transaction T.

In a first non-limitative embodiment, the payment device D is a mobile device. In non-limitative examples, a mobile device is a mobile phone, a smart phone, a tablet etc.

In a second non-limitative embodiment, the payment device D is a secure element. A secure element is a secured component which may perform cryptographic functionalities and is adapted to store a secret key.
In a non-limitative variant, the secure element D is a smart card. The smart card may be contact or contactless.
In other non-limitative variants, the secure element D is an eSE (embedded secure element), a micro-SD, an UICC etc.
In a first non-limitative variant of said second embodiment, the secure element D is not comprised within a mobile device.
In a second non-limitative variant of said second embodiment, the secure element D is comprised within a mobile device.

Hence, in non-limitative examples, the customer may purchase some goods:
- using its payment card D. In this case, he performs an online payment transaction T via internet on the merchant's internet site using a local terminal or not; or
- using directly its mobile device D (with or without a secure element). In this case, he performs a payment transaction T via the merchant's internet site which is displayed on the mobile phone.

In a non-limitative embodiment, the payment device D communicates with the remote server RS via APDU (Application Protocol Data Unit) commands. Hence, for each function described hereinafter, one or a plurality of ADPU commands may be used.
In a non-limitative embodiment, the payment device D communicates with the remote server RS via an http or an https communication protocol. Hence, when using APDU commands, said APDU commands are sent over an https communication channel.

As illustrated in Fig. 2, the payment device D comprises:
- a pair of public-private authentication keys ICCAutKpu, ICCAutKpv (also simply referred as public-private keys ICCAutKpu, ICCAutKpv);
- a first root public key ICCCAKpu;
- a payment device certificate chain ICCca (also simply referred as certificate chain ICCca);
- session key's parameters Kparam (corresponding to the cryptographic algorithm ALG to be used to generate the session keys K_{ICC}Enc, K_{ICC}Mac, K_{RS}Mac).

The payment device D comprises only one first root public key ICCCAKpu.

In a non-limitative embodiment, the payment device certificate chain ICCca is of a format of an EMV certificate chain.

The functions of the payment device D are illustrated in Fig. 1.

In order to establish a secure messaging channel SM with the remote server RS for a payment transaction T, the payment device D is adapted to perform the following functions:
- receive from said remote server RS a remote server certificate chain RSc (function illustrated RX(D, RS, RSca));
- verify said remote server certificate chain RSca (function illustrated VERIF(D, RSca));
- receive from said remote server RS a remote server challenge RSch (function illustrated RX(D, RS, RSch));
- send to said remote server RS said first parameter SKA, a payment device signature Sc, and a payment device challenge ICCch, said payment device signature SIcc being based on said remote server challenge RSch and on said first parameter SKA (function illustrated TX(D, RS, SKA, Sc, ICCch));
- receive said second parameter SKB and a remote server signature Srs from said remote server RS, said remote server signature Srs being based on said second parameter SKB and on said payment device challenge ICCch (function illustrated RX(D, RS, SKB, Srs));
- verify said remote server signature Srs for authenticating said remote server RS (function illustrated VERIF(D, Srs));
- generate session keys K_{ICC}Enc, K_{ICC}Mac, K_{RS}Mac from a first random number RD1 and from said second parameter SKB using a cryptographic algorithm ALG, for establishing a secure messaging channel SM (function illustrated GEN(D, K_{ICC}Enc, K_{ICC}Mac, K_{RS}Mac, ALG)).

In a non-limitative embodiment, the cryptographic algorithm ALG is a Diffie-Hellman algorithm. In this case, the session keys' parameters KParam are Diffie-Hellman parameters (g, p and q described in the following). The Diffie-Hellman algorithm permits to simply generate the session keys.

The different functions are described in detail hereinafter.

### • Verification of the remote server certificate chain

The remote server certificate chain RSca (also referred as certificate chain RSca in the following) is verified with a second root public key RSCAKpu.

The certificate chain RSca permits to check the integrity of the public authentication key RSAutKpu which is comprised within a remote server certificate RSc. It permits to check that said public authentication key RSAutKpu has been approved by a certification authority referred as CA. The payment device D will be sure that it will verify the remote server signature Srs with the right public authentication key RSAutKpu.

In a non-limitative embodiment, said certification authority CA is VISA®, or Mastercard®.

It is to be reminded that a certificate chain comprises a root certificate and specific certificates and that a certificate comprises some data and a signature of said data.
Hence, the certificate chain RSca comprises a root certificate and specific certificates based on a second root public key RSCAKpu and on a remote server public authentication key RSAutKpu, the last certificate of the chain being the remote server certificate RSc.
The root certificate is provided by the certification authority CA (VISA®, or Mastercard® for example) which holds the second root private key RSCAKpv associated to the second root public key RSCAKpu.

This root certificate is the root of a hierarchy of certificates. All of the certificates which follow in the hierarchy are signed with a private key of their predecessor. The certificate which follows the root certificate is an issuer certificate ISSc. In a non-limitative example, an issuer is a bank which emits the payment device D.
The issuer certificate ISSc is signed with the private authentication key, here the root private key RSCAKpv, of the predecessor certificate which is the root certificate.

The certificate which follows the issuer certificate ISSca is the remote server certificate RSc.
The remote server certificate RSc is signed with the private authentication key ISSKpv of the predecessor certificate which is the issuer certificate ISSc.

When checking the certificate chain RSca of the remote server RS, the payment device D verifies the signature of all the certificates of the hierarchy beginning by the root certificate. It verifies each signature of the certificates with the public key extracted from the predecessor certificate. Finally, the payment device D verifies the signature of the remote server certificate RSc with the public authentication key RSAutKpu extracted from the predecessor certificate which is the issuer certificate ISSc.

Hence, if the certificate chain RSca is valid, it means that the authenticity and the integrity of the certificate chain RSca have been proved and that the remote server RS is reliable.
It is to be noted that the authenticity proves that the data in the successive certificates of the remote server certificate chain RSca have been signed by an authorized entity, here the certification authority CA, then the issuer ISS, then the remote server RS. The integrity proves that the remote server certificate RSc is correctly built and that the transmitted data are correct.

From the verification, a remote server public authentication key RSAutKpu (also referred as public key RSAutKpu in the following) of the remote server RS is retrieved from the remote server certificate RSc. Said public key RSAutKpu will be used to verify the remote server signature Srs.
Therefore, in a non limitative embodiment, said payment device D is further adapted to retrieve a remote server public authentication key RSAutKpu from said remote server certificate chain RSca, said remote server public authentication key RSAutKpu being used to verify said remote server signature Srs (function illustrated RETRV(D, RSAutKpu, RSca)).

### • Receiving the remote server challenge

The remote server challenge RSch is used by the payment device D to compute its signature SIcc as described in the following.

It is to be noted that there is a new remote server challenge RSch which is sent each time there is a new payment transaction T to be executed.

In a non-limitative embodiment, the remote server challenge RSch is a random number.

### • Sending the payment device challenge ICCch

In order to send a payment device challenge ICCch, in a non-limitative embodiment, the payment device D is further adapted to compute said payment device challenge ICCch (function illustrated COMP(D, ICCch)).

It is to be noted that the computation and the transmission of a payment device challenge ICCch is performed each time a payment transaction T is to be executed.

The payment device challenge ICCch is used by the remote server RS to compute its own signature Srs.

In a non-limitative embodiment, the payment device challenge ICCch is a random number.

### • Sending a first parameter SKA

In order to send the first parameter SKA, in a non-limitative embodiment, the payment device D is further adapted to:
- compute said first parameter SKA using a first random number RD1 (function illustrated COMP(D, SKA(RD1))).

When, the cryptographic algorithm ALG is a Diffie-Hellman algorithm, the first parameter SKA is equal to g^{RD1} mod p, with RD1 a first random number with g < p, p a prime number (the larger prime field order) and g a generator of the q-order cyclic subgroup of GF(p)*, GF being the Galois Field. Said first random number RD1 is inferior to q, a prime number. g, p and q are Diffie-Hellman parameters and are public data. Therefore, there are also known by the remote server RS.
It is to be noted that different sets of g, p and q parameters may be associated to different sets of payment devices D.
The Diffie-Hellman algorithm being well-known by the man skilled in the art, it won't be described in more details here.

### • Sending a payment device signature

In order to send a payment device signature SIcc, in a non-limitative embodiment, the payment device D is further adapted to:
- compute said payment device signature SIcc from said remote server challenge RSch and from said first parameter SKA (function illustrated COMP(D, SIcc(H1 (RSch, SKA)))).

In a non-limitative embodiment, the computation of said payment device signature SIcc is performed with the RSA algorithm. It permits to comply with the EMV standard.

In a non-limitative embodiment, the payment device signature SIcc is of an EMV format so that the length of the data which are signed are of the same size of the length of the public authentication key ICCAutKpu.
As the length of the remote server challenge RSch and the first parameter SKA which are to be signed is greater than the length of the public authentication key ICCAutKpu, one uses a hash function FH in order to obtain a length which is equal to the one of the public authentication key ICCAutKpu.
It permits to obtain a signature format which is compliant with EMV.
Hence, in a non-limitative variant of said embodiment, said payment device D is further adapted to:
- compute a first hash value H1 based on the first parameter SKA concatenated with the remote server challenge RSch (function illustrated COMP(D, H1 (SKA, RSch));
- compute the payment device signature SIcc using said first hash value H1 and the private authentication key ICCAutKpv.

In a non-limitative embodiment, the computation of the first hash value H1 is performed with a hash function FH which is the SHA-256 algorithm well-known by the man skilled in the art.

A signature computation being well-known by the man skilled in the art, it is not described here.

It is to be noted that with the signature SIcc, the payment device D sends the data in clear which have been signed, that is to say the first parameter SKA and the remote server challenge RSch which has been previously sent by the remote server RS.

### • Verification of the remote server signature

The verification of the remote server signature Srs permits the payment device D to authenticate said remote server RS. It is performed each time there is a payment transaction T to be executed.

It proves the payment device D that it is indeed the remote server RS that has produced the second parameter SKB for the generation of the session keys K_{ICC}Enc, KIccMac, K_{RS}Mac.

The verification of the remote server signature Srs is performed by:
- computing DMS2=Srs ^{e2} mod n2 (when the RSA algorithm is used), with:
   - Srs the signature (received from the remote server RS), RSAutKpu the public authentication key which has been retrieved from the remote server certificate RSc, e2 the RSA public exponent and n2 the RSA modulus, which are the components of said public authentication key RSAutKpu;
- applying the hash function FH on the data sent in clear with the signature Srs resulting in an hash value H2', said data sent being the payment device challenge ICCch and the second parameter SKB;
- compare the data DSM2 and the hash value H2'.
- if the data are the same, it means that the signature Srs is authentic, the message (here the payment device challenge ICCch and the first and

second parameters SKA and SKB) is authentic, and therefore the remote server RS is authenticated.

### • Generation of the session keys

The payment device D generates the session keys K_{ICC}Enc, K_{ICC}Mac, K_{RS}Mac from a first random number RD1 and from said second parameter SKB using a cryptographic algorithm ALG.
When, the cryptographic algorithm ALG is a Diffie-Hellman algorithm and the session keys' parameters KParam are Diffie-Hellman parameters, as described before, the second parameter SKB is equal to g^{RD2}mod p, with RD2 a second random number and g and p Diffie Hellman parameters.
The payment device D is further adapted to compute K=SKB ^{RD1} mod p with K being used for the generation of the session keys K_{ICC}Enc, K_{ICC}Mac, K_{RS}Mac (function illustrated COMP(D, K(SKB, RD1)).
K is the common secret shared by the payment device D and the remote server RS.
It is to be noted that g and p are known by the payment device D and by the remote server RS.

Hence, with the generation of the session keys K_{ICC}Enc, K_{ICC}Mac, K_{RS}Mac, the payment device D enables to establish a secure messaging channel SM with the remote server RS for a payment transaction T. Said secure messaging channel SM is a communication channel though which both remote server RS and payment device D may transmit some data for a payment transaction T.

As illustrated in Fig. 2, the payment device D further comprises:
- a parameter index IndDH.

In a non-limitative embodiment, the payment device D is further adapted to send to said remote server RS said parameter index IndDH (function illustrated TX(D, RS, IndDH).

The transmission of this index IndDH may be performed separately or together with the transmission of the indexes Indp, Indj described in the following.

The cryptographic algorithm ALG used to generate the session keys K_{ICC}Enc, K_{ICC}Mac, K_{RS}Mac uses different sets of session key parameters KParam.
A set of session key parameters KParam is associated to a payment device D. From one payment device D to another payment device D, the set of session key parameters KParam may differ.
The remote server RS comprises all the different sets of session key parameters Kparam which are used by the different payment devices D emitted by the different issuers ISS such as different banks.
Therefore, the parameter index IndDH enables the remote server RS to select the right session keys' parameters KParam which will be used by the payment device D to generate the session keys K_{ICC}Enc, K_{ICC}Mac, K_{RS}Mac, and to generate itself the same session keys K_{ICC}Enc, K_{ICC}Mac, K_{RS}Mac as described in the following.

It is to be noted that the combination between the authentication of the remote server RS through its signature Srs and the Diffie-Hellman session keys generation avoids an attack called "the man in the middle attack". Indeed, the second parameter SKB (which is equal to g^{RD2} mod p) is signed by remote server RS. The payment device D needs to verify that the second parameter SKB received in clear from the remote server RS corresponds to the one contained in the remote server signature Srs received. Without the private authentication key RSAutKpv which is used for the computation of the remote server signature Srs, an attacker is not able to find the second random number RD2, to compute a valid second parameter SKB and to forge a valid remote server signature Srs. Therefore, an attacker is not able to establish a secure messaging channel with the payment device D instead of the remote server RS. The payment device D will be able to know that it is a fake server.

### • Payment transaction

Hence, said payment device D is adapted to perform a payment transaction T with said remote server RS (function illustrated PAYM(D, RS, T)) via the secure messaging channel SM.
In a non-limitative embodiment, said payment transaction is an EMV transaction.

As illustrated in Fig. 2, in a non-limitative embodiment, for the payment transaction T, said payment device D is further adapted to send to said remote server RS (function illustrated TX(D, RS, ICCr, ICCe, ISSr, ISSe)):
- a payment device reminder ICCr;
- a payment device public exponent ICCe;
- an issuer reminder ISSr;
- an issuer public exponent ISSe.

It is to be noted that the exchange of the different reminders ICCr, ISSr and exponents ICCe, ISSe complies with the EMV standard.

The payment device reminder ICCr comprises the data which are needed to complete the public authentication key ICCAutKpu (extracted from the payment device certificate ICCc as described in the following) and is transmitted in clear, that is to say without any encryption or MAC.

The issuer reminder ISSr comprises the data which are needed to complete the issuer public authentication key ISSKpu and is transmitted in clear.

The public exponents ICCe and ISSe are used for the management of RSA keys, that is to say respectively the pair of public key-private keys ICCAutKpu-ICCAutKpv and the pair of public key-private keys ISSKpu, ISSKpv, for the signature SIcc verification. As the use of public exponents is well-known by the man skilled in the art, it won't be described here. It is to be noted that the public exponents ICCe and ISSe are not necessarily identical. In the same manner, as illustrated in Fig. 2, in a non-limitative embodiment, said payment device D is further adapted to receive from remote server RS (function illustrated RX(D, RS, RSr, RSe)):
- a remote server reminder RSr;
- a remote server public exponent RSe.

The remote server reminder RSr comprises the data which are needed to complete the public authentication key RSAutKpu (extracted from the remote server certificate RSc) and is transmitted in clear, that is to say without any encryption or MAC.
The remote server public exponent RSe is used for the management of RSA keys, that is to say the pair of public key-private keys RSAutKpu-RSAutKpv, for the signature Srs verification.

The session key K_{ICC}Enc permits the payment device D to encrypt some data.
The session key K_{ICC}Mac permits the payment device D to provide a MAC1 (Message Authentication Code) of the data it sends to the remote server RS, said MAC1 being used to verify the integrity of the data sent.
The session key K_{RS}Mac permits the remote server RS to provide a MAC2 (Message Authentication Code) of the data it sends to the payment device D, said MAC2 being used to verify the integrity of the data sent. The value of the session key K_{RS}Mac, K_{ICC}Mac indicates from which sender the data are sent, respectively, from the remote server RS or from the payment device D. It avoids an attacker to intercept some data sent by the payment device D for example, to modify them and to send them back to the payment device D, pretending it comes from the remote server RS.

In a non-limitative embodiment, the payment device D is further adapted to receive from said remote server RS said secure message M2 through the secure messaging channel SM (function illustrated RX(D, RS, M2, SM)). Hence, for the payment transaction T, the payment device D is further adapted to authenticate said remote server RS with a secure message M2 received from said remote server RS through the secure messaging channel SM (function illustrated AUTH(D, RS, M2, SM)).

The secure message M2 comprises the data sent by the remote server RS to the payment device D for the payment transaction T.
In non-limitative examples, the data sent comprise the amount of the payment transaction T, the identification of the merchant, the current date etc.
The secure message M2 comprises data which are encrypted with the session key K_{ICC}Enc, and a MAC2 of the data in clear, said MAC2 being computed with the session key K_{RS}Mac.

The authentication is performed with the session keys K_{ICC}Enc, K_{ICC}Mac, K_{RS}Mac.
The payment device D verifies with the session key K_{RS}Mac the MAC2 of the data included in the secure message M2 and which follows said data, and decipher the data within the secure message M2 with the session key KI_{CC}Enc.

It is to be noted that when the payment device D authenticates the remote server RS with the secure message M2, it will:
- a) verify the integrity of the secure message M2 with its session key K_{RS}Mac, that is to say it will compute a new MAC2' and compare it with the MAC2 received. If both MAC2' and MAC2 are equal, the data in the secure message M2 have not been altered by a malware.
- b) decipher the secure message M2 with its session key K_{ICC}Enc. It is to be noted that when the secure message M2 is not correctly deciphered, it means that the payment device D deciphers the secure message M2 which does not fit the expectation. It means that the remote server RS is a fake one. If the secure message M2 is correctly deciphered, the remote server RS is authentic.

The payment device D is further adapted to send a secure message M1 (described in the following) to said remote server RS through said secure message channel SM (function illustrated TX(D, RS, M1, SM)).

### • Sending a payment device certificate chain

As illustrated in Fig. 1, in a non-limitative embodiment, the payment device D is further adapted to send to said remote server RS a payment device certificate chain ICCca (function illustrated TX(D, RS, ICCca)).
The certificate chain ICCca is checked by the remote server RS.

As illustrated in Fig. 2, the payment device D further comprises:
- a first root public key index Indp;
- a second root public key root index Indj.

In a non-limitative embodiment, the payment device D is further adapted to send to said remote server RS (function illustrated TX(D, RS, Indp, Indj):
- said first root public key index Indp;
- said second root public key index Indj.

The transmission of these indexes Indp, Indj may be performed separately or together.

In a non-limitative embodiment, the first root public key ICCCAKpu is of 1408bits. It complies with the root public key of a certification authority CA such as VISA® or Mastercard®.
As the security of a key is related to its length, a certification authority CA such as VISA® or Mastercard® may provide different first root public keys ICCCAKpu for different sets of payment devices D in order to increase the security of said payment devices D, one payment device D comprising only one first root public key ICCCAKpu.
The first root public key index Indp is a pointer to the first root public key ICCCAKpu used within the certification process of a payment device D.
The remote server RS comprises all the first root public keys ICCCAKpu used for the certificate chains ICCca of the different payment devices D, said certificate chains ICCca being emitted by a certification authority CA. With the first root public key index Indp, the remote server RS will be able to know precisely which first root public key ICCCAKpu (corresponding to a first root private key ICCCAKpv) is to be used to verify the payment device certificate chain ICCca received from the payment device D.

The second root public key index Indj is a pointer to a second root public key RSCAKpu (corresponding to a second root private key RSCAKpv) used within the certification process of the remote server RS. Said second root public key RSCAKpu is used to verify the remote server certificate chain RSca (above-described).
With the second root public key index Indj, the payment device D will be able to indicate precisely to the remote server RS which remote server certificate chain RSca said payment device D is able to verify. Indeed, the remote server RS comprises a plurality of remote server certificate chains RSca and therefore a plurality of second root public keys RSCAKpu which have been certified by a same or different certification authorities CA, The payment device D is able to verify the remote server certificate chain RSca which root certificate has been provided by the same certification authority CA than the one of said payment device D. Hence, a payment device D certified by VISA® will be able to verify a remote server certificate chain RSca which corresponding second root public key RSCAKpu has been certified by VISA®

In a non-limitative embodiment, the first root public key index Indp and the second root public key index Indj may be the same if the first and second root public keys ICCCAKpu, RSCAKpu used for the certification process on both sides (payment device D and remote server RS) are the same root public key.

### • Remote server

In a non-limitative example, the remote server RS is a server of a service provider which provides one or a plurality of goods to which the customer wants to purchase.
The remote server RS has been certified by a certification authority CA. Hence, it permits to manage a payment transaction T with any payment device D emitted by any banks.

As illustrated in Fig. 2, the remote server RS comprises:
- a pair of public and private authentication keys RSAutKpu, RSAutKpv (also simply referred as public-private keys or as remote server public and private authentication keys);
- a second root public key RSCAKpu;
- a remote server certificate chain RSca (also simply referred as certificate chain RSca);
- the first root public key(s) ICCCAKpu above-described;
- the session keys' parameters KParam corresponding to the cryptographic algorithm ALG to be used to generate the session keys K_{ICC}Enc, K_{ICC}Mac, K_{RS}Mac.

In a non-limitative embodiment, the remote server certificate chain RSca is of a format of an EMV certificate chain.

In a non-limitative embodiment, the remote server RS comprises a host security module HSM adapted to perform cryptographic functions and which comprises the secret data, such as the second root public key RSCAKpu, the pair of public and private authentication keys RSAutKpu, RSAutKpv, the session keys' parameters KParam, the first root public key(s) ICCCAKpu.

In non-limitative embodiments, the remote server RS comprises:
- a plurality of first root public keys ICCCAKpu, a first root public key ICCCAKpu being chosen according to the first root public key root index Indp above-described;
- a plurality of session keys' parameters KParam, a session keys' parameters KParam being chosen according to the parameter index IndDH above-described;
- a plurality of remote server certificate chain RSca, each associated to a set of payment devices D. A remote server certificate chain RSca corresponds to a second root public key RSCAKpu and is chosen according to the second root public key root index Indj above-described.

In a non-limitative embodiment, the cryptographic algorithm ALG is a Diffie-Hellman algorithm. In this case, the session keys' parameters KParam are Diffie-Hellman parameters. The Diffie-Hellman algorithm permits to simply generate the session keys.

The functions of the remote server RS are illustrated in Fig. 1.

Said remote server RS is adapted to:
- receive from said payment device D the payment device certificate chain ICCca (function illustrated RX(RS, D, ICCca));
- verify said payment device certificate chain ICCca (function illustrated VERIF(RS, ICCca));
- receive from said payment device D said first parameter SKA, a payment device signature SIcc and a payment device challenge ICCch (function illustrated RX(RS, D, SKA, SIcc, ICCch));
- send to said payment device D said second parameter SKB, a remote server signature Srs and a remote server challenge RSch, said remote server signature Srs being based on said second parameter SKB and on said payment device challenge ICCch (function illustrated TX(RS, D, SKB, Srs));
- verify said payment device signature SIcc for authenticating said payment device D (function illustrated VERIF(RS, SIcc));
- generate the session keys K_{ICC}Enc, KIccMac, K_{RS}Mac from said first parameter SKA and from a second random number RD2 using a cryptographic algorithm ALG, for establishing a secure messaging channel SM (GEN(RS, K_{ICC}Enc, K_{ICC}Mac, K_{RS}Mac, ALG)).

The different functions are described in detail hereinafter.

### • Verification of the payment device certificate chain

The payment device certificate chain ICCca (also referred as certificate chain ICCca in the following) is verified with a first root public key ICCCAKpu.

The certificate chain ICCca permits to check the integrity of the public authentication key ICCAutKpu which is comprised within the payment device certificate ICCc. It permits to check that said public authentication key ICCAutKpu has been approved by the certification authority CA. The remote server RS will be sure that it will verify the payment device signature SIcc with the right public authentication key ICCAutKpu.

The payment device certificate chain ICCca comprises a root certificate and specific certificates based on the first root public key ICCCAKpu and on the public authentication key ICCAutKpu, the last certificate of the chain being the payment device certificate ICCc.
It is to be reminded that the root certificate is stored in the payment device D with the associated first root public key ICCCAKpu at the personalization production phase of said payment device D.
The root certificate is provided by a certification authority referred as CA which holds a first root private key ICCCAKpv associated to the first root public key ICCCAKpu. In a non-limitative embodiment, said certification authority CA is VISA®, or Mastercard®.

This root certificate is the root of a hierarchy of certificates. All of the certificates which follow in the hierarchy are signed with a private key of their predecessor. The certificate which follows the root certificate is an issuer certificate ISSca. In a non-limitative example, an issuer is a bank which emits the payment device D.
The issuer certificate ISSc is signed with the private authentication key ICCCAKpv of the predecessor certificate which is the root certificate.
The certificate which follows the issuer certificate ISSca is a payment device certificate ICCc.
The payment device certificate ICCc is signed with the private key ISSKpv of the predecessor certificate which is the issuer certificate ISSc.

When checking the certificate chain ICCca of the payment device D, the remote server RS verifies the signature of all the certificates of the hierarchy beginning by the root certificate. It verifies each signature of the certificates with the public key extracted from the predecessor certificate. Finally, the remote server RS verifies the signature of the payment device certificate ICCc with the public authentication key ICCAutKpu extracted from the predecessor certificate which is the issuer certificate ISSc.

Hence, if the certificate chain ICCca is valid, it means that the authenticity and the integrity of the certificate chain ICCca have been proved and that the payment device D is reliable.

From the verification, a payment device public authentication key ICCAutKpu (also referred as public key ICCAutKpu in the following) of the payment device D is retrieved. Said public key ICCAutKpu will be used to verify the payment device signature SIcc.
Therefore, in a non limitative embodiment, said remote server RS is further adapted to:
- retrieve said payment device public authentication key ICCAutKpu from said payment device certificate chain ICCca, said payment device public authentication key ICCAutKpu being used to verify said payment device signature SIcc (function illustrated RETRV(RS, ICCAutKpu, ICCca)).

In a non-limitative embodiment, the remote server RS is further adapted to receive from said payment device D (function illustrated RX(RS, D, Indp, Indj):
- the first root public key index Indp above-described;
- the second root public key root index Indj.

### • Receiving the payment device challenge

The payment device challenge ICCch is used by the remote server RS to compute its signature Srs.
It is to be noted that there is a new payment device challenge ICCch which is sent each time there is a new payment transaction T to be executed.

### • Sending the remote server challenge RSch

In order to send a remote server challenge RSch, in a non-limitative embodiment, the remote server RS is further adapted to compute said remote server challenge RSch (function illustrated COMP(RS, RSch)).
It is to be noted that the computation and the transmission of a remote server challenge RSch is performed each time a payment transaction T is to be executed. The remote server challenge RSch is used by the payment device D to compute its own signature SIcc as above-described.
In a non-limitative embodiment, the remote server challenge RSch is a random number.

### • Sending a second parameter SKB

In order to send the second parameter SKB, in a non-limitative embodiment, the remote server RS is further adapted to:
- compute said second parameter SKB using a second random number RD2 (function illustrated COMP(RS, SKB(RD2))).

When, the cryptographic algorithm ALG is a Diffie-Hellman algorithm, the second parameter SKB is equal to g^{RD2}mod p, with RD2 a second random number with g < p, p a prime number and g a generator of the q-order cyclic subgroup of GF(p)*. Said second random number RD2 is inferior to q, a prime number.
g, p and q are Diffie Hellman parameters and are public data.

It is to be noted that when the remote server RS comprises a host security module HSM, said host security module HSM is adapted to perform said computation.

### • Sending a remote server signature

In order to send a remote server signature Srs, in a non-limitative embodiment, the remote server RS is further adapted to:
- compute said remote server signature Srs from said payment device challenge ICCch and from said second parameter SKB (function illustrated COMP(RS, Srs(H2(ICCch, SKB)))).

In another non-limitative embodiment, the remote server RS computes said remote server signature Srs from said payment device challenge ICCch, from said first parameters SKA and from said second parameter SKB.

In a non-limitative embodiment, the computation of said remote server signature Srs is performed with the RSA algorithm. It permits to comply with the EMV standard.

It is to be noted that when the remote server RS comprises a host security module HSM, said host security module HSM is adapted to perform said computation.

In a non-limitative embodiment, the remote server signature Srs is of an EMV format so that the length of the data which are signed are of the same size of the length of the public authentication key RSAutKpu.
As the length of the payment device challenge ICCch and the second parameter SKB which are to be signed is greater than the length of the public authentication key RSAutKpu, one uses a hash function FH in order to obtain a length which is equal to the one of the public authentication key RSAutKpu. It permits to obtain a signature format which is compliant with EMV.
Hence, in a non-limitative embodiment, said remote server RS is further adapted to:
- compute a second hash value H2 based on the second parameter SKB concatenated with the payment device challenge ICCch (function illustrated COMP(RS, H2(SKB, ICCch));
- compute the remote server signature Srs using said second hash value H2 and said remote server private key RSAutKpv.

In another non-limitative embodiment, the second hash value H2 is based on the first parameter SKA concatenated with the second parameter SKB concatenated with the payment device challenge ICCch.

In a non-limitative embodiment, the computation of the second hash value H2 is performed with a hash function FH which is a SHA-256 algorithm well-known by the man skilled in the art.

It is to be noted that with the signature Srs, the remote server RS sends the data in clear which have been signed, that is to say the second parameter SKB and the payment device challenge ICCch which has been previously sent by the payment device D.

### • Verification of the payment device signature

The verification of the payment device signature SIcc permits the remote server RS to authenticate said payment device D.
It is performed each time there is a payment transaction T to be executed.
It proves the remote server RS that it is indeed the payment device D that has produced the first parameter SKA for the generation of the session keys K_{ICC}Enc, KIccMac, K_{RS}Mac.

The verification of the payment device signature SIcc is performed by:
- computing DSM1= SIcc ^{e1} mod n1 (when the RSA algorithm is used) with:
   - SIcc the signature (received from the payment device D), ICCAutKpu the public authentication key which has been retrieved from the payment device certificate ICCc, e1 the RSA public exponent and n1 the RSA modulus, which are the components of said public authentication key ICCAutKpu ;
- applying the hash function FH on the data sent in clear with the signature SIcc resulting in a hash value H1', said data sent being the remote server challenge RSch and the firs parameter SKA;
- compare the data DSM1 and the hash value H1';
- if the data are the same, it means that the signature SIcc is authentic, the message (here the remote server challenge RSch) is authentic, and therefore the payment device D is authenticated.

Hence, with the verification of each other signatures SIcc, and Srs, the remote server RS and the payment device D have performed a mutual authentication. Said mutual authentication permits to ensure that both the payment device D and the remote server RS are reliable. It permits to verify that it is the right payment device D and that it is the right remote server RS which has respectively produced the first parameter SKA and the second parameter SKB for the session keys.

### • Generation of the session keys

The remote server RS generates the session keys K_{ICC}Enc, K_{ICC}Mac, K_{RS}Mac from said first parameter SKA and from the second random number RD2 using a cryptographic algorithm ALG.
When, the cryptographic algorithm ALG is a Diffie-Hellman algorithm and the session keys' parameters KParam are Diffie-Hellman parameters, as described before, the first parameter SKA is equal to g^{RD1} mod p, with RD1 a first random number and g and p Diffie Hellman parameters.
The remote server RS is further adapted to compute K=SKA ^{RD2} mod p with K being used for the generation of the session keys K_{ICC}Enc, K_{ICC}Mac, K_{RS}Mac (function illustrated COMP(RS, K(SKA, RD2)).

It is to be noted that the K computed by the remote server RS based on the first parameter SKA, is the same than the K computed by the payment device D based on the second parameter SKB.

Hence, with the generation of the session keys K_{ICC}Enc, K_{ICC}Mac, K_{RS}Mac, the remote server RS enables to establish a secure messaging channel SM with the payment device D for a payment transaction T.

The session keys K_{ICC}Enc, K_{ICC}Mac, K_{RS}Mac generated are the same generated by the payment device D as above-described.

In a non-limitative embodiment, the remote server RS is further adapted to receive from the payment device D the parameter index IndDH above-described (function illustrated RX(RS, D, IndDH).

It is to be noted that the combination between the authentication of the payment device D through its signature SIcc and the Diffie-Hellman session keys generation avoids an attack called "the man in the middle attack". Indeed, the first parameter SKA (which is equal to g^{RD1} mod p) is signed by the payment device D. The remote server RS needs to verify that the first parameter SKA received in clear from the payment device D corresponds to the one contained in the payment device signature SIcc received. Without the private authentication key ICCAutKpv which is used for the computation of the payment device signature SIcc, an attacker is not able to find the first random number RD1, to compute a valid first parameter SKA and to forge a valid payment device signature SIcc. Therefore, an attacker is not able to establish a secure messaging channel with the remote server RS instead of the payment device D. The remote server RS will be able to know that it is a fake payment device.

### • Payment transaction

Hence, said remote server RS is adapted to perform a payment transaction T with said payment device D (function illustrated PAYM(RS, D, T)) via the secure messaging channel SM.
In a non-limitative embodiment, said payment transaction is an EMV transaction.

As illustrated in Fig. 2, in a non-limitative embodiment, said remote server RS is further adapted to receive from said payment device D (function illustrated RX(RS, D, ICCr, ICCe, ISSr, ISSe)):
- a payment device reminder ICCr;
- a payment device public exponent ICCe;
- an issuer reminder ISSr;
- an issuer public exponent ISSe.

As illustrated in Fig. 2, in a non-limitative embodiment, said remote server RS is further adapted to send to said payment device D (function illustrated TX(RS, D, RSr, RSe)):
- a remote server reminder RSr;
- a remote server public exponent RSe.

The remote server reminder RSr comprises the data which are need to complete the public authentication key RSAutKpu (extracted from the remote server certificate RSc) and is transmitted in clear.

The remote server public exponent RSe is used for the generation of RSA keys that is to say the pair of public key-private keys RSAutKpu-RSAutKpv, for the signature Srs verification. As the use of a public exponent is well-known by the man skilled in the art, it won't be described here.

The session key K_{ICC}Enc permits the remote server RS to encrypt some data.

In a non-limitative embodiment, the remote server RS is further adapted to receive a secure message M1 from said payment device D through the secure message channel SM (function illustrated RX(RS, D, M1, SM)). Hence, for the payment transaction T, the remote server RS is further adapted to authenticate said payment device D with a secure message M1 (above-described) received from said payment device D through the secure messaging channel SM (function illustrated AUTH(RS, D, M1, SM)).

The secure message M1 comprises the data sent by the payment device D to the remote server RS for the payment transaction T.
In non-limitative examples, the data sent comprise the PAN ("Primary Account Number") and the expiration date of the payment device D etc.
The secure message M1 comprises data which are encrypted with the session key K_{ICC}Enc, and a MAC1 of the data in clear, said MAC1 being computed with the session key K_{ICC}Mac.

The authentication is performed with the session keys K_{ICC}Enc, K_{ICC}Mac, K_{RS}Mac.
The remote server RS verifies with the session key K_{ICC}Mac the MAC1 of the data included in the secure message M1 and which follows said data, and then decipher the data within the secure message M1 with the session key K_{ICC}Enc.
The same explanation than for the authentication of the remote server RS by the payment device D with the secure message M2 and with the MAC2 above-described may be applied for the authentication of the payment device D by the remote server RS with the secure message M1 and with the MAC1.

The remote server RS is further adapted to send a secure message M2 (above-described) to said payment device D through said secure message channel SM (function illustrated TX(RS, D, M2, SM)).

### • Sending a remote server certificate chain

As illustrated in Fig. 1, in a non-limitative embodiment, the remote server RS is further adapted to send to said payment device D a remote server certificate chain RSca (function illustrated TX(RS, D, RSca)).
The certificate chain RSca is checked by the payment device D as above-described.

In a non-limitative embodiment, the remote server RS is further adapted to receive from said payment device D (function illustrated RX(RS, D, Indp, Indj):
- said first root public key index Indp above-described;
- said second root public key root index Indj above-described.

Hence, as above-described, the system SYS comprising said payment device D and said remote server RS is compliant with the EMV standard:
- when the certificates ICCca, RSca are of the EMV format;
- with the authentication of the payment device D by the remote server RS;
- with the exchange of the different reminders ICCr, ISSr, RSr and of the different exponents ICCe, ISSe, RSe;
- when the signatures SIcc and Srs are computed according to the RSA algorithm.

In addition to the EMV standard, the system SYS permits to have:
- an authentication of the remote server RS by the payment device D;
- a generation of the session keys K_{ICC}Enc, K_{ICC}Mac, K_{RS}Mac based on the Diffie-Hellman algorithm.

### • Method

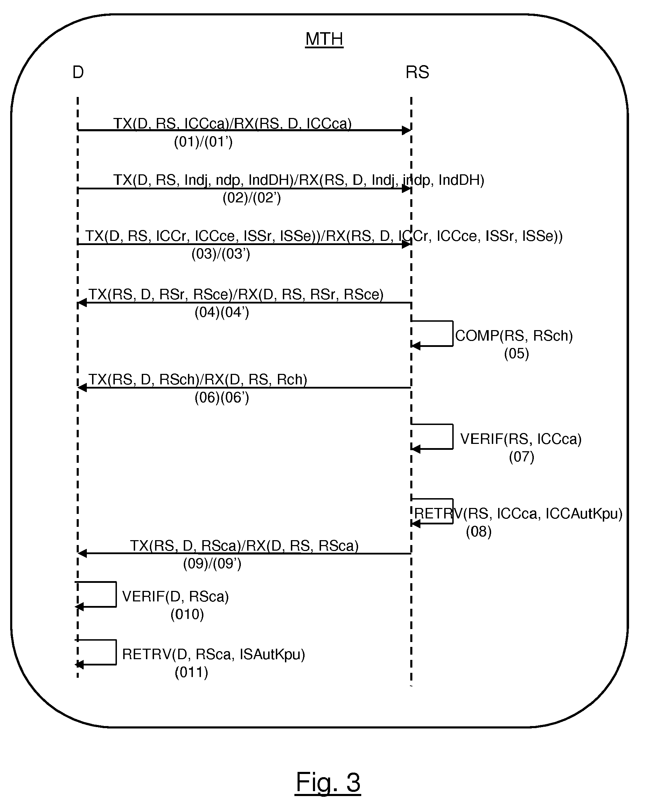

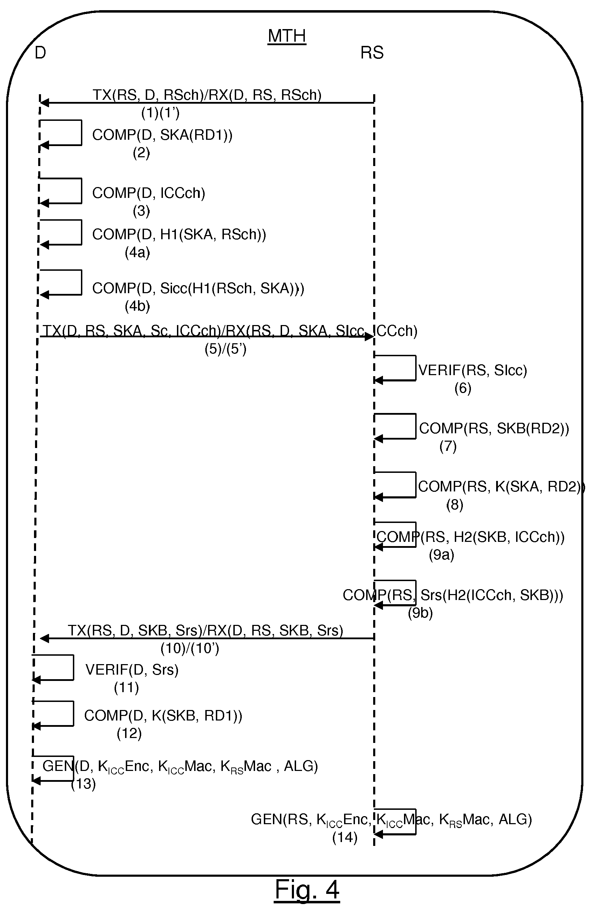

Hence, the system SYS comprising said payment device D and said remote server RS is adapted to carry out a method MTH for establishing a secure messaging channel SM between said payment device D and said remote server RS for a payment transaction T.
Said method is described hereinafter in reference to Fig. 3 and Fig. 4.

In the non-limitative embodiment of the method MTH illustrated:
- the cryptographic algorithm ALG used is the Diffie-Hellman algorithm;
- the first root public key index Indp, the second root public key index Indj and the parameter index IndDH are used. In this embodiment, they are all sent/receive altogether.

As described before, the method MTH comprises the following steps illustrated in Fig. 3:
- 01) said payment device D transmits to said remote server RS which receives it (step 01') the payment device certificate chain ICCca;
- 02) said payment device D transmits to said remote server RS which receives them (step 02'):
   - the first root public key index Indp;
   - the second public key index Indj;
   - the parameter index IndDH.
- 03) said payment device D transmits to said remote server RS which receives them (step 03') :
   - the payment device reminder ICCr;
   - the payment device public exponent ICCe;
   - the issuer reminder ISSr; and
   - the issuer public exponent ISSe.
- 04) said remote server RS transmits to said payment device D to which receives them (step 04') :
   - the remote server reminder RSr;
   - the remote server public exponent RSe;
- 05) said remote server RS computes the remote server challenge RSch.
- 06) the remote server RS sends the remote server challenge RSch to the payment device D which receives it (step 06').
- 07) said remote server RS verifies said payment device certificate chain ICCca (step illustrated VERIF(RS, ICCca)).
   The verification is performed with the first root public key ICCCAKpu which has been selected (in the remote server RS) according to the first root public key index Indp.
- 08) said remote server RS retrieves a payment device public key ICCAutKpu from said payment device certificate chain ICCca, said payment device public key ICCAutKpu being used to verify said payment device signature SIcc.
- 09) said remote server RS transmits to said payment device D which receives it (step 09') the remote server certificate chain RSca. Said remote server certificate chain RSca has been selected by the remote server RS according to the second root public key index Indj sent by the payment device D.
- 010) said payment device D verifies said remote server certificate chain RSca.
   The verification is performed with the second root public key RSCAKpu.
- 011) said payment device D retrieves a remote server public authentication key RSAutKpu from said remote server certificate chain RSca, said remote server public authentication key RSAutKpu being used to verify said remote server signature Srs.

It is to be noted that the steps 03/03', 04/04' and 05/05' may be performed in any other order or in parallel or altogether.
It is to be noted that the steps 03/03', 04/04' and 05/05' may be performed after or before any of the others steps 01 to 011.
It is to be noted that the steps 09/09', 010 and 011 may be performed respectively in parallel with the steps 01/01', 04, and 07.

Hence, after the payment device D has retrieved the certified public key RSAutKpu (and complement it with the remote server reminder RSr) and after said remote server RS has retrieved the certified public key ICCAutKpu (and complement it with the payment device reminder ICCr), they may perform the mutual authentication, while exchanging the data SKA, SKB needed for the session keys.

Fig. 4 illustrates the method MTH with the further computation steps of the first and second parameters SKA, SKB, of the signatures SIcc, Srs and of the signatures verification.

As illustrated in Fig. 4, said method MTH comprises the following steps:
- 1) the remote server RS sends to the payment device D which receives it (step 01') the remote server challenge RSch. This remote server challenge RSch will be used when the payment device D computes its signature SIcc.
- 2) the payment device D computes the first parameter SKA using a first random number RD1, said computation comprising:
   - the computation of said first random number RD1. Said first random number RD1 is inferior to q, a prime number.
   - the computation of the first parameter SKA = g^{RD1} mod p, with p a prime number. This first parameter SKA is the first half of the Diffie-Hellman key which is used to compute the session keys K_{ICC}Enc, K_{ICC}Mac, K_{RS}Mac.
- 3) the payment device D computes a payment device challenge ICCch. It is to be noted that said payment device challenge ICCch is different for each payment transaction T.
- 4) the payment device D computes a signature SIcc, said computation comprising:
   - in sub-step 4a) the computation of a first hash value H1 based on the first parameter SKA concatenated with the remote server challenge RSch. Hence, in a non-limitative embodiment, H1=SHA256(SKA||RSch);
   - in sub-step 4b) the computation of the payment device signature SIcc using said first hash value H1 and the payment device private authentication key ICCAutKpv. Hence, when the RSA algorithm is used for said computation, SIcc = (H1)^{d} mod n, with:
      - d, the private authentication key ICCAutKpv;
      - n, the public authentication key ICCAutKpu;
      - n = p'*q' prime numbers;
      - d, the modular multiplicative inverse of e (modulo ϕ(n));
      - 1 < e < ϕ(*n*) and the greatest common divisor of (e, ϕ(*n*)) = 1 ;
      - ϕ(*n*) = ϕ(*p'*)ϕ(*q'*) = (*p'* - 1)(*q'* - 1) = *n - (p' + q' -* 1), where ϕ is Euler's totient function.
- 5) the payment device D sends to said remote server RS said first parameter SKA, said payment device signature SIcc, and said payment device challenge ICCch.
   It is to be noted that with the payment device signature Sc, the payment device D also sends with the signature SIcc the remote server challenge RSch previously received from the remote server RS.
- 5') the remote server RS receives these data SKA, Sc, ICCch and in step 6) verifies said payment device signature SIcc for authenticating said payment device D.
   It permits to be sure that it is the payment device D which has generated the first parameter SKA, and not a malware.
- 7) the remote server RS computes the second parameter SKB using a second random number RD2, said computation comprising:
   - the computation of said second random number RD2. Said second random number RD2 is inferior to q, the prime number above-described.
   - the computation of the second parameter SKB = g^{RD2}mod p, with p the prime number above-described. This first parameter SKB is the second half of the Diffie-Hellman key which is used to compute the session keys K_{ICC}Enc, K_{ICC}Mac, K_{RS}Mac.
      It is to be noted that the prime numbers p, q and the modulus are the data which will be used also for the computation of the signature Srs.
- 8) the remote server RS computes K=SKA ^{RD2} mod p.
- 9) the remote server RS computes a signature Srs, said computation comprising:
   - in sub-step 9a) the computation of a second hash value H2 based on the second parameter SKB concatenated with the payment device challenge ICCch (in the non-limitative illustrated example). Hence, in a non-limitative embodiment, H2=SHA256(SKB||ICCch);
   - in sub-step 9b) the computation of the remote server signature Srs using said second hash value H2 and said remote server private key RSAutKpv. Hence, when the RSA algorithm is used for said computation, Srs = (H2)^{d} mod n.
   - d, the private authentication key RSAutKpv;
   - n, the public authentication key RSAutKpu;
   - n = p'*q' the prime numbers;
   - d, the modular multiplicative inverse of e (modulo ϕ(n));
   - 1 < e < ϕ(n) and the greatest common divisor of (e, ϕ(n)) = 1 ;
   - ϕ(n) = ϕ(p')ϕ(q') = (p' - 1)(q' - 1) = n - (p' + q' - 1), where ϕ is Euler's totient function.
- 10) the remote server RS sends to said payment device D said second parameter SKB and said remote server signature Srs for remote server authentication.
- 10') the payment device D receives said data SKB, Srs and in step 11) verifies said remote server signature Srs for authenticating said remote server RS;
   It permits to be sure that it is the remote server RS which has generated the second parameter SKB, and not a malware.
- 12) the payment device D computes K = SKB ^{RD1} mod p.
- 13) the remote server RS generates said session keys K_{ICC}Enc, K_{ICC}Mac, K_{RS}Mac from said first parameter SKA and from said second random number RD2 using the cryptographic algorithm ALG, for establishing a secure messaging channel SM.
   In a non-limitative embodiment:
   - the session key K_{RS}Mac is equal to the 16 most significant bytes of SHA-256(K || 03 || PD), with PD a chosen ASCII character for padding.
   - the session key K_{ICC}Mac is equal to the 16 most significant bytes of SHA-256(K || 01 || PD);
   - the session key K_{ICC}Enc is equal to the 16 most significant bytes of SHA-256(K || 02 || PD).
   The numbers 01, 02, and 03 used for the concatenations permit to be sure that three different session keys are generated.
   It is to be noted that the remote server RS uses the K computed during step 8) from the first parameter SKA.
- 14) the payment device D generates the same said session keys K_{ICC}Enc, K_{ICC}Mac, K_{RS}Mac from said second parameter SKB and from said first random number RD1 using the cryptographic algorithm ALG, for establishing a secure messaging channel SM.
   In a non-limitative embodiment:
   - the session key K_{RS}Mac is equal to the 16 most significant bytes of SHA-256(K || 03 || PD), with PD a chosen ASCII character for padding.
   - the session key K_{ICC}Mac is equal to the 16 most significant bytes of SHA-256(K || 01 || PD);
   - the session key K_{ICC}Enc is equal to the 16 most significant bytes of SHA-256(K || 02 || PD).
   It is to be noted that the payment device D uses the K computed during step 2) from the second parameter SKB.

It is to be noted that step 13) may be performed in parallel with step 14) or before.

Hence, the generation of the session keys permits to set-up a secure messaging channel SM.
Hence, the mutual authentication performed between the remote server RS and the payment device D, and the session keys generation permit to ensure a secure communication between them.
When the secure messaging channel SM is set-up between the payment device D and the remote server RS, said payment device D and the remote server RS may securely communicate together via said secure messaging channel SM, a communication comprising data exchanges. Said data exchanges use the generated session keys for data encryption (via the K_{ICC}Enc session key) and data integrity check (via a MAC and by means of the K_{ICC}Mac or K_{RS}Mac). The data exchanged between said payment device D and said remote server RS are the data for the payment transaction T.

It is to be noted that the different session keys K_{ICC}Mac and K_{RS}Mac permit also to verify which of the remote server RS or of the payment device D has sent the data.

In non-limitative embodiments the exchange of data via said secure messaging channel SM for the payment transaction T may then be performed by means of the EMV protocol.

This EMV protocol being well known by the man skilled in the art, it is not described here.

It is to be understood that the present invention is not limited to the aforementioned embodiments.
Hence, the certificate chains ICCca, and RSca are compliant with the X509 standard.
Hence, in a non-limitative embodiment, the computation of the remote server signature Srs and of the payment device signature SIcc may be performed with the RSA-CRT algorithm.
Hence, in a non-limitative embodiment, the payment device D is adapted to be connected to any local terminal (which is a mobile device or not) which is adapted to communicate with said secure element D and said remote server RS.
Hence, in a non-limitative embodiment, the session keys generated K_{ICC}Mac and K_{RS}Mac are the same.

Hence, some embodiments of the invention may comprise one or a plurality of the following advantages:
- it permits an "off-card entity", such as a remote server RS, to behave as a point of sale device (which verifies the payment device's PAN), as it establishes a high secure messaging channel SM with the payment device D;
- it permits a "card not present" transaction, such as an online transaction, to be as secured as a "card present" transaction;
- it avoids an attack called "the man in the middle attack to be successful;
- it permits to establish a high secure messaging channel SM according to the EMV standard, when it uses the RSA algorithm for the signatures SIcc and Srs, and the EMV certificate format for the certificates ICCc, RSc;
- when the RSA algorithm is used for the signatures SIcc and Srs and the certificates ICCc, RSc are of the EMV format, it ensures interoperability with payment EMV based;
- it secures the connection between the payment device D, such as a payment card, and the remote server RS. Thus sensitive pieces of information might be exchanged with a maximum of security preventing external attack;
- the interlacing of the mutual authentication and the session keys exchange permits to minimize the commands sent to the payment device D and to avoid "the man in the middle attack";
- the use of the different indexes Indj, Indp, IndDH avoids the updates of the payment device D, in particular the updates of the first root public key ICCCAKpu or of the second root public key RSCAKpu ;
- the use of the different indexes Indj, Indp, minimizes the management of the root public keys ICCCAKpu, RSCAKpu within the payment device D;
- it reduces the number of frauds for online commerce or over a mobile device.

## Claims

1. Payment device (D) adapted to establish a secure messaging channel (SM) with a remote server (RS) for a payment transaction (T), wherein said payment device (D) is adapted to:
- receive from said remote server (RS) a remote server certificate chain (RSca);
- verify said remote server certificate chain (RSca);
- receive from said remote server (RS) a remote server challenge (RSch);
- send to said remote server (RS) a first parameter (SKA), a payment device signature (SIcc), and a payment device challenge (ICCch), said payment device signature (SIcc) being based on said remote server challenge (RSch) and on said first parameter (SKA);
- receive a second parameter (SKB) and a remote server signature (Srs) from said remote server (RS), said remote server signature (Srs) being based on said second parameter (SKB) and on said payment device challenge (ICCch);
- verify said remote server signature (Srs) for authenticating said remote server (RS);
- generate session keys (K_{ICC}Enc, KIccMac, K_{RS}Mac) from a first random number (RD1) and from said second parameter (SKB) using a cryptographic algorithm (ALG), for establishing a secure messaging channel (SM).

2. Payment device (D) according to claim 1, wherein said payment device (D) is further adapted to:
- compute said first parameter (SKA) using said first random number (RD1).

3. Payment device (D) according to claim 1 or claim 2, wherein said payment device (D) is further adapted to send to said remote server (RS):
- a first root public key index (Indp);
- a second root public key index (Indj);
- a parameter index (IndDH).

4. Payment device (D) according to any one of the previous claims 1 to 3, wherein the cryptographic algorithm (ALG) is a Diffie-Hellman algorithm.

5. Payment device (D) according to any one of the previous claims 1 to 4, wherein the computation of said payment device signature (SIcc) is performed with the RSA algorithm.

6. Payment device (D) according to any one of the previous claims 1 to 5, wherein said payment device (D) is further adapted to retrieve a remote server public authentication key (RSAutKpu) from said remote server certificate chain (RSca), said remote server public authentication key (RSAutKpu) being used to verify said remote server signature (Srs).

7. Payment device (D) according to any one of the previous claims 1 to 6, wherein said first parameter (SKA) is equal to g^{RD1} mod p, with RD1 the first random number and g and p Diffie Hellman parameters, and wherein the payment device (D) is further adapted to compute K=SKB ^{RD1} mod p with K, K being used for the generation of the session keys (K_{ICC}Enc, K_{ICC}Mac, K_{RS}Mac).

8. Payment device (D) according to any one of the previous claims 1 to 7, wherein said payment device (D) is further adapted to send to said remote server (RS):
- a payment device reminder (ICCr);
- a payment device public exponent (ICCe);
- an issuer reminder (ISSr);
- an issuer public exponent (ISSe).

9. Payment device (D) according to any one of the previous claims 1 to 8, wherein said payment transaction (T) is an EMV transaction.

10. Payment device (D) according to any one of the previous claims 1 to 9, wherein the remote server certificate chain (RSca) is in the format of an EMV certificate.

11. Payment device (D) according to any one of the previous claims 1 to 10, wherein said payment device (D) is a mobile device (D) or a secure element (SE).

12. Remote server (RS) adapted to establish a secure messaging channel (SM) with a payment device (D) for a payment transaction (T), wherein said remote server (RS) is adapted to establish a secure messaging channel (SM) with a payment device (D) for a payment transaction (T), wherein said remote server (RS) is adapted to:
- receive from said payment device (D) a payment device certificate chain (ICCca);
- verify said payment device certificate chain (ICCca);
- receive from said payment device (D) a first parameter (SKA), a payment device signature (SIcc) and a payment device challenge (ICCch);
- send to said payment device (D) a second parameter (SKB), a remote server signature (Srs) and a remote server challenge (RSch), said remote server signature (Srs) being based on said second parameter (SKB) and on said payment device challenge (ICCch);
- verify said payment device signature (SIcc) for authenticating said payment device (D);
- generate session keys (K_{ICC}Enc, KIccMac, K_{RS}Mac) from said first parameter (SKA) and from a second random number (RD2) using a cryptographic algorithm (ALG), for establishing a secure messaging channel (SM).

13. Remote server (RS) according to claim 12, wherein said remote server (RS) is further adapted to retrieve a payment device public authentication key (ICCAutKpu) from said payment device certificate chain (ICCca), said payment device public authentication key (ICCAutKpu) being used to verify said payment device signature (SIcc).

14. Remote server (RS) according to claim 13 or claim 14, wherein said remote server (RS) is further adapted to:
- compute said second parameter (SKB) using said second random number (RD2).

15. Remote server (RS) according to any one of the previous claims 12 to 14, wherein said second parameter (SKB) is equal to g^{RD2}mod p, with RD2 the second random number and g and p Diffie- Hellman parameters and wherein the remote server (RS) is further adapted to compute K=SKA ^{RD2} mod p with K, K being used for the generation of the session keys (K_{ICC}Enc, K_{ICC}Mac, K_{RS}Mac).

16. Remote server (RS) according to any one of the previous claims 12 to 15, wherein said remote server (RS) is further adapted to send to said payment device (D):
- a remote server reminder (RSr);
- a remote server public exponent (RSe).

17. System (SYS) adapted to establish a secure messaging channel (SM) for a payment transaction (T) between a payment device (D) and a remote server (RS), wherein said system (S) comprises said payment device (D) according to any one of the previous claims 1 to 11 and said remote server (RS) according to any one of the previous claims 12 to 16.

18. Method (MTH) for establishing a secure messaging channel (SM) for a payment transaction (T) between a payment device (D) and a remote server (RS), wherein said method (MTH) comprises:
- receive by means of said payment device (D) from said remote server (RS) a remote server certificate chain (RSca);
- verify by means of said payment device (D) said remote server certificate chain (RSca);
- receive by means of said remote server (RS) from said payment device (D) a payment device certificate chain (ICCca);
- verify by means of said remote server (RS) said payment device certificate chain (ICCca);
- receive by means of said payment device (D) from said remote server (RS) a remote server challenge (RSch);
- send by means of said payment device (D) to said remote server (RS) a first parameter (SKA), a payment device signature (SIcc), and a payment device challenge (ICCch), said payment device signature (SIcc) being based on said remote server challenge (RSch) and on said first parameter (SKA);
- send by means of said remote server (RS) to said payment device (D) a second parameter (SKB), a remote server signature (Srs) and a remote server challenge (RSch), said remote server signature (Srs) being based on said second parameter (SKB) and on said payment device challenge (ICCch);
- receive by means of said payment device (D) a second parameter (SKB) and a remote server signature (Srs) from said remote server (RS), said remote server signature (Srs) being based on said second parameter (SKB) and on said payment device challenge (ICCch);
- verify by means of said payment device (D) said remote server signature (Srs) for authenticating said remote server (RS);
- receive by means of said remote server (RS) from said payment device (D) a first parameter (SKA), a payment device signature (SIcc) and a payment device challenge (ICCch);
- verify by means of said remote server (RS) said payment device signature (SIcc) for authenticating said payment device (D);
- generate by means of said payment device (D) session keys (K_{ICC}Enc, K_{ICC}Mac, K_{RS}Mac) from a first random number (RD1) and from said second parameter (SKB) using a cryptographic algorithm (ALG), for establishing a secure messaging channel (SM);
- generate by means of said remote server (RS) session keys (K_{ICC}Enc, K_{ICC}Mac, K_{RS}Mac) from said first parameter (SKA) and from a second random number (RD2) using a cryptographic algorithm (ALG), for establishing a secure messaging channel (SM).
